# EUROPEAN PATENT APPLICATION

(11) **EP 4 205 916 A1**
(43) Date of publication of application: **05.07.2023**
(21) Application number: 21861044.2
(22) Date of filing: 16.07.2021
(51) Int. Cl.: B25J 13/00

(54) **LEARNING DEVICE, LEARNING METHOD, LEARNING PROGRAM, CONTROL DEVICE, CONTROL METHOD, AND CONTROL PROGRAM**

(30) Priority: 31.08.2020 JP 2020146401
(71) Applicant: OMRON Corporation, Kyoto 600-8530 (JP)
(72) Inventor: TANAKA, Kazutoshi, Kyoto-shi, Kyoto 600-8530 (JP); HAMAYA, Masashi, Kyoto-shi, Kyoto 600-8530 (JP); YONETANI, Ryo, Kyoto-shi, Kyoto 600-8530 (JP)
(74) Representative: SONN Patentanwälte OG
(86) International application number: PCT/JP2021/026871
(87) International publication number: WO 2022/044615

(57) **Abstract**

This learning device comprises: a creation unit which creates a state transition model that predicts a next state of a robot on the basis of a measured robot state and a command for the robot, and a collection state transition model including a collection unit that collects the prediction results; a command generation unit which executes, for each control period, processes for inputting the measured robot state, generating candidates of the command for the robot, acquiring a robot state predicted from the robot state and the candidates of the command for the robot by using the collection state transition model 20, and generating and outputting a command for maximizing a reward corresponding to the acquired state; and a learning unit which updates the collection state transition model in order to reduce an error between a next robot state predicted in correspondence with the output command and a robot state measured in correspondence with the next state.

## Description

### Technical Field

The present disclosure relates to a learning device, a learning method, a learning program, a control device, a control method, and a control program.

### Background Art

In a control device that controls a robot, if the robot can autonomously acquire control rules for achieving a work operation, the work of humans creating a motion plan and a control device can be eliminated.

If a robot is made to acquire the control rules by a usual motion learning method, the control rules must be re-learned from scratch in order to use the robot in another, similar work operation.

To address this problem, it has been thought to use transfer learning that adapts a model that has been learned in the past to another sphere.

However, direct application of general transfer learning to an actual robot is not very realistic. This is because there is a long learning time in transfer learning, and transfer of the learned results for a work operation that is accompanied by contact, such as an assembly operation by the robot or the like, is difficult, and the like.

Non-Patent Document 1 discloses a technique of directly learning control rules by re-utilization by combining a network that expresses the control rules.

Further, Non-Patent Document 2 discloses a technique of correcting an object model and the throwing speed by actual machine learning. However, the technique disclosed in Non-Patent Document 2 cannot be applied to a learned model between objects.

Non-Patent Document 3 discloses a technique of learning model errors by a neural network. Note that the technique disclosed in Non-Patent Document 3 does not consider great changes relating to the work operation, such as changes in the position and the angle of the robot, the size of the object, and the like.

Non-Patent Document 1: "MULTIPOLAR: Multi-Source Policy Aggregation for Transfer Reinforcement Learning between Diverse Environmental Dynamics", 28 Sep 2019, Mohammadamin Barekatain, Ryo Yonetani, Masashi Hamaya, <URL: https://arxiv.org/abs/1909.13111>
Non-Patent Document 2: "TossingBot: Learning to Throw Arbitrary Objects with Residual Physics", 27 Mar 2019, Andy Zeng, Shuran Song, Johnny Lee, Alberto Rodriguez, Thomas Funkhouser, <URL: https://arxiv.org/abs/1903.11239>
Non-Patent Document 3: "Residual Reinforcement Learning for Robot Control", 7 Dec 2018, Tobias Johannink, Shikhar Bahl, Ashvin Nair, Jianlan Luo, Avinash Kumar, Matthias Loskyll, Juan Aparicio Ojea, Eugen Solowjow, Sergey Levine <URL: https://arxiv.org/abs/1812.03201>

### SUMMARY OF INVENTION

### Technical Problem

The technique disclosed in Non-Patent Document 1 has the problem that application to actual machines is difficult because model-free reinforcement learning requires training over a long period of time.

Further, the technique disclosed in Non-Patent Document 2 has the problem that diversion to new work operations is difficult because a control device and a plan are designed exclusively for a specific work operation.

Further, the technique disclosed in Non-Patent Document 3 has the problem that diversion to new work operations is difficult because model errors of a specific work operation are corrected.

The present disclosure was made in view of the above-described points, and an object thereof is to provide a learning device, a learning method, a learning program, a control device, a control method, and a control program in which, when a robot autonomously acquires control rules for achieving a work operation, learning can be carried out in a short time.

### Solution to Problem

A first aspect of the disclosure is a learning device comprising: a creating section creating an aggregate state transition model including a plurality of state transition models that predict a next state of an object of control on the basis of a measured state of the object of control and a command for the object of control, and an aggregating section that aggregates results of prediction by the plurality of state transition models; a command generating section executing, each control period, respective processings of inputting the measured state of the object of control, generating a plurality of candidates for a command or a series of commands for the object of control, acquiring a plurality of states or series of states of the object of control that are predicted from the state of the object of control and the plurality of candidates for a command or a series of commands for the object of control by using the aggregate state transition model, deriving a reward corresponding to each of the plurality of states or series of states of the object of control, and, on the basis of the derived rewards, generating and outputting a command that maximizes the reward; and a learning section that updates the aggregate state transition model such that an error between a predicted next state of the object of control corresponding to the outputted command, and a measured state of the object of control corresponding to the next state, becomes smaller.

In the above-described first aspect, each control period, the command generating section may generate one candidate for a command or series of commands for the object of the control, and derive a reward that is based on the generated candidate, and update, one or more times, the candidate for the command or series of commands such that the reward becomes larger, and thereby generate a candidate for the command or series of commands.

In the above-described first aspect, each control period, the command generating section may generate a plurality of candidates for a command or a series of commands for the object of control, and thereafter, may acquire a state or a series of states of the object of control that is predicted from each of the plurality of candidates.

In the above-described first aspect, the aggregate state transition model may be a structure that consolidates outputs of the plurality of state transition models at the aggregating section, in accordance with aggregating weights of the respective outputs.

In the above-described first aspect, the learning section may update the aggregating weights.

In the above-described first aspect, the aggregate state transition model may include an error compensating model in parallel with the plurality of state transition models, and the learning section may update the error compensating model.

A second aspect of the disclosure is a learning method wherein a computer executes processings of: creating an aggregate state transition model including a plurality of state transition models that predict a next state of an object of control on the basis of a measured state of the object of control and a command for the object of control, and an aggregating section that aggregates results of prediction by the plurality of state transition models; executing, each control period, respective processings of inputting the measured state of the object of control, generating a plurality of candidates for a command or a series of commands for the object of control, acquiring a plurality of states or series of states of the object of control that are predicted from the state of the object of control and the plurality of candidates for a command or a series of commands for the object of control by using the aggregate state transition model, deriving a reward corresponding to each of the plurality of states or series of states of the object of control, and, on the basis of the derived rewards, generating and outputting a command that maximizes the reward; and updating the aggregate state transition model such that an error between a predicted next state of the object of control corresponding to the outputted command, and a measured state of the object of control corresponding to the next state, becomes smaller.

A third aspect of the disclosure is a learning program causing a computer to execute processings of: creating an aggregate state transition model including a plurality of state transition models that predict a next state of an object of control on the basis of the measured state of the object of control and a command for the object of control, and an aggregating section that aggregates results of prediction by the plurality of state transition models; executing, each control period, respective processings of inputting the measured state of the object of control, generating a plurality of candidates for a command or a series of commands for the object of control, acquiring a plurality of states or series of states of the object of control that are predicted from the state of the object of control and the plurality of candidates for a command or a series of commands for the object of control by using the aggregate state transition model, deriving a reward corresponding to each of the plurality of states or series of states of the object of control, and, on the basis of the derived rewards, generating and outputting a command that maximizes the reward; and updating the aggregate state transition model such that an error between a predicted next state of the object of control corresponding to the outputted command, and a measured state of the object of control corresponding to the next state, becomes smaller.

A fourth aspect of the disclosure is a control device comprising: a storage storing an aggregate state transition model learned by the learning device relating to the first aspect; and a command generating section executing, each control period, respective processings of inputting the measured state of the object of control, generating a plurality of candidates for a command or a series of commands for the object of control, acquiring a plurality of states or series of states of the object of control that are predicted from the state of the object of control and the plurality of candidates for a command or a series of commands for the object of control by using the aggregate state transition model, deriving a reward corresponding to each of the plurality of states or series of states of the object of control, and, on the basis of the derived rewards, generating and outputting a command that maximizes the reward.

A fifth aspect of the disclosure is a control method wherein a computer executes processings of: acquiring an aggregate state transition model from a storage that stores the aggregate state transition model learned by the learning device relating to the first aspect; and executing, each control period, respective processings of inputting the measured state of the object of control, generating a plurality of candidates for a command or a series of commands for the object of control, acquiring a plurality of states or series of states of the object of control that are predicted from the state of the object of control and the plurality of candidates for a command or a series of commands for the object of control by using the aggregate state transition model, deriving a reward corresponding to each of the plurality of states or series of states of the object of control, and, on the basis of the derived rewards, generating and outputting a command that maximizes the reward.

A sixth aspect of the disclosure is a control program causing a computer to execute processings of: acquiring an aggregate state transition model from a storage that stores the aggregate state transition model learned by the learning device relating to the first aspect; and executing, each control period, respective processings of inputting the measured state of the object of control, generating a plurality of candidates for a command or a series of commands for the object of control, acquiring a plurality of states or series of states of the object of control that are predicted from the state of the object of control and the plurality of candidates for a command or a series of commands for the object of control by using the aggregate state transition model, deriving a reward corresponding to each of the plurality of states or series of states of the object of control, and, on the basis of the derived rewards, generating and outputting a command that maximizes the reward.

### Advantageous Effects of Invention

In accordance with the present disclosure, at the time when a robot autonomously acquires control rules for achieving a work operation, learning can be carried out in a short time.

### BRIEF DESCRIPTION OF DRAWINGS

Fig. 1 is a structural drawing of a robot system in a learning phase.
Fig. 2(A) is a drawing illustrating the schematic structure of robot 10, and (B) is a drawing in which the distal end side of an arm of the robot is enlarged.
Fig. 3 is a block drawing illustrating hardware structures of a learning device.
Fig. 4 is a structural drawing of an aggregate state transition model.
Fig. 5 is a drawing illustrating a known model group.
Fig. 6 is a drawing for explaining motion primitives (MPs) that structure a work operation of fitting-in a peg.
Fig. 7 is a flowchart of learning processing.
Fig. 8 is a flowchart illustrating another example of learning processing.
Fig. 9 is a structural drawing of the robot system in an applied phase.

### DESCRIPTION OF EMBODIMENTS

Examples of embodiments of the present disclosure are described hereinafter with reference to the drawings. Note that structural elements and portions that are the same or equivalent are denoted by the same reference numerals in the respective drawings. Further, there are cases in which dimensional proportions in the drawings are exaggerated for convenience of explanation, and they may differ from actual proportions.

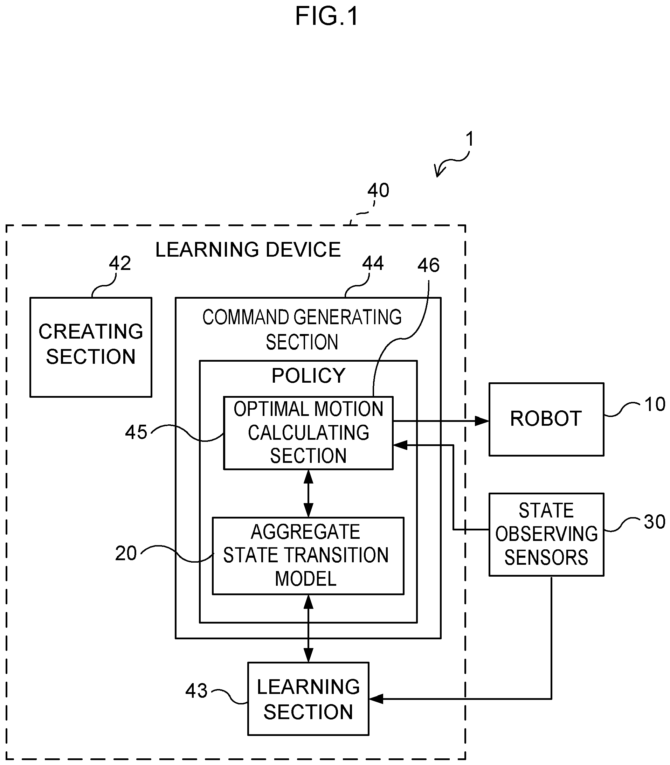

Fig. 1 illustrates the structure of a robot system in a learning phase. In the learning phase, robot system 1 has a robot 10, state observing sensors 30, and a learning device 40.

### (Robot)

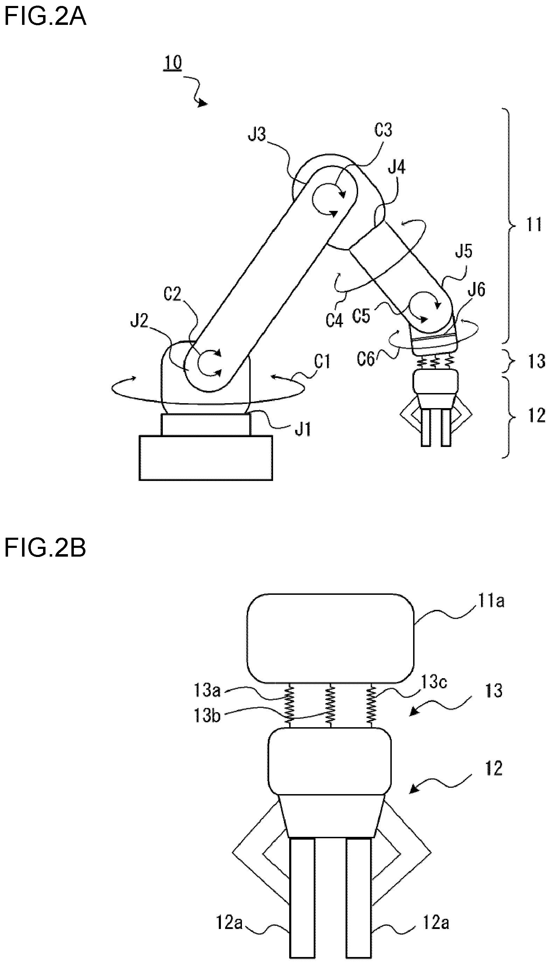

Fig. 2(A) and Fig. 2(B) are drawings illustrating the schematic structure of the robot 10 that serves as an example of an object of control. The robot 10 in the present embodiment is a vertical articulated robot of six degrees of freedom, and a gripper (hand) 12 is provided, via a flexible portion 13, at distal end 11a of arm 11. The robot 10 carries out a fitting-in work operation of grasping a part (e.g., a peg) and fitting the part into a hole by the gripper 12.

As illustrated in Fig. 2(A), the robot 10 has the arm 11 of six degrees of freedom that is provided with joints J1 ~ J6. The respective joints J1 ~ J6 connect links together such that the links can rotate in the directions of arrows C1 ~ C6 by unillustrated motors. Here, a vertical articulated robot is described as an example, but the robot 10 may be a horizontal articulated robot (a SCARA robot). Further, although a robot of six degrees of freedom is described as an example, the robot 10 may be an articulated robot of another number of degrees of freedom such as five or seven or the like, or may be a parallel link robot.

The gripper 12 has one set of nipping portions 12a, and controls the nipping portions 12a and nips a part. The gripper 12 is connected to the distal end 11a of the arm 11 via the flexible portion 13, and moves accompanying the movement of the arm 11. In the present embodiment, the flexible portion 13 is structured by three springs 13a ~ 13c that are disposed in a positional relationship in which the proximal portions of the respective springs are the respective vertices of an equilateral triangle, but the number of springs may be any number. Further, the flexible portion 13 may be another mechanism, provided that it is a mechanism that generates restoring force with respect to fluctuations in position and by which flexibility is obtained. For example, the flexible portion 13 may be an elastic body such as a spring or rubber, or a damper, or an air-pressure or liquid-pressure cylinder or the like. The flexible portion 13 is preferably structured by a passive element. Due to the flexible portion 13, the distal end 11a of the arm 11 and the gripper 12 are structured so as to be able to move relatively in the horizontal direction and the vertical direction by 5 mm or more, and preferably 1 cm or more, and more preferably 2 cm or more.

The gripper 12 may be provided with a mechanism such that the gripper 12 can be switched between a flexible state and a fixed state with respect to the arm 11.

Further, although a structure in which the flexible portion 13 is provided between the distal end 11a of the arm 11 and the gripper 12 is described here as an example, a flexible portion may be provided midway along the gripper 12 (e.g., at places of the finger joints or midway along the cylindrical portions of the fingers), or midway along the arm (e.g., at the place of any of the joints J1 ~ J6 or midway along the cylindrical portion of the arm). Further, the flexible portion 13 may be provided at plural places among these.

By using machine learning (e.g., model-based reinforcement learning), the robot system 1 acquires models for carrying out control of the robot 10 that has the flexible portion 13 as described above. Because the robot 10 has the flexible portion 13, the robot 10 is stable even if the grasped part is made to contact the environment, and the fitting-in work operation and the like can be realized even if the control period is delayed. On the other hand, because the positions of the gripper 12 and the part are indefinite due to the flexible portion 13, it is difficult to obtain an analytical control model. Thus, in the present embodiment, a control model is acquired by using machine learning.

When machine learning of a control model is simply carried out, an extremely large amount of data must be collected, and learning requires time. Thus, in the robot system 1, although details thereof are described later, an aggregate state transmission model 20, which aggregates plural state transition models that have already been learned, is learned. Namely, the aggregate state transmission model 20, which aggregates plural, learned state transition models, is created by transfer learning by using the plural, learned state transition models as the state transition models of before transfer. Due thereto, learning is possible in a short time as compared with a case in which a state transition model is learned from scratch.

### (State Observing Sensors)

The state observing sensors 30 observe the state of the robot 10, and output the observed data as state observation data. For example, encoders at the joints of the robot 10, visual sensors (cameras), motion capturing devices, force related sensors, or the like are used as the state observing sensors 30. As the state of the robot 10, the position/posture of the distal end 1 1a of the arm 11 can be specified from the angle of each joint, and the posture of the part (the work object) can be estimated from visual sensors and/or force related sensors. In a case in which a marker for motion capturing is mounted to the gripper 12, the position/posture of the gripper 12 can be specified as the state of the robot 10, and the posture of the part (the work object) can be estimated from the position/posture of the gripper 12.

Force related sensor is a generic term for force sensors and torque sensors, and moreover, is a generic term that also includes tactile sensors in cases in which the sensor is provided at a region that contacts the part. A force related sensor may be provided at the surface of the portion of the gripper 12 that grasps the part, or at a joint portion within the gripper 12, in order to detect the force that the gripper of the robot 10 receives from the part. In a case in which the region between the gripper 12 and the arm 11 is a flexible portion, the force related sensor may be provided between the gripper 12 and the arm 11 and may detect the force that acts between the gripper 12 and the arm 11. The force related sensor is a sensor that, for example, detects forces along one axis, three axes or six axes, of one element or several elements, as the state of the robot 10. By using a force related sensor, the gripper 12 can more accurately comprehend how to grasp the part, i.e., the posture of the part, and appropriate control is possible.

Further, a visual sensor also can detect the position and posture of the gripper 12 itself or of the part grasped by the gripper 12 as the state of the robot 10. In a case in which the region between the gripper 12 and the arm 11 is a flexible portion, the position/posture of the gripper 12 with respect to the arm 11 can be specified as the state of the robot 10 also by a displacement sensor that detects displacement of the gripper 12 with respect to the arm 11.

In this way, the state of at least any of the flexible portion 13, the region of the robot 10 that is further toward the side grasping the object than the flexible portion 13, and the grasped part can be detected by various sensors, and the results of detection of the various sensors can be acquired as state observation data.

### (Learning Device)

The learning device 40 acquires the aggregate state transition model 20 of the robot 10 by using machine learning.

The aggregate state transition model 20 that is acquired by the learning device 40 is installed in the control device that controls the robot 10, and is used in actual work operations. This control device may have a learning function, and, in this case, may carry out additional learning.

In accordance with the present applied example, because the robot 10 has the flexible portion 13, it is easy to operate the gripper 12 or the object while causing the gripper 12 or the object to contact the environment, without carrying out complicated force control. Further, high-speed work operations are possible because the gripper or the object can be made to contact the environment with hardly any reduction in speed. Moreover, because learned models are acquired by machine learning, the system can easily be constructed.

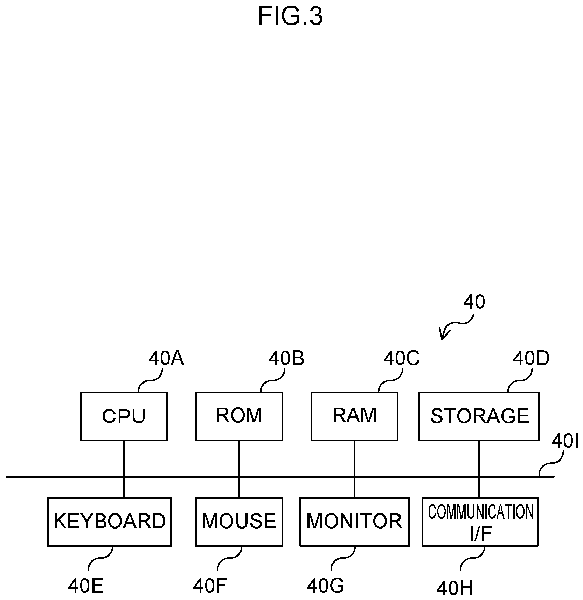

Fig. 3 is a block drawing illustrating hardware structures of the learning device relating to the present embodiment. As illustrated in Fig. 3, the learning device 40 has a structure that is similar to that of a general computer (information processing device), and has a CPU (Central Processing Unit) 40A, a ROM (Read Only Memory) 40B, a RAM (Random Access Memory) 40C, a storage 40D, a keyboard 40E, a mouse 40F, a monitor 40G and a communication interface 40H. These respective structures are connected so as to be able to communicate with one another via bus 401.

In the present embodiment, a learning program for executing learning processing of a learning model is stored in the ROM 40B or the storage 40D. The CPU 40A is a central computing processing unit, and executes various programs and controls respective structures. Namely, the CPU 40A reads-out a program from the ROM 40B or the storage 40D, and executes the program by using the RAM 40C as a workspace. In accordance with programs recorded in the ROM 40B or the storage 40D, the CPU 40A carries out control of the above-described respective structures, and various computing processings. The ROM 42 stores various programs and various data. The RAM 40C temporarily stores programs and data as a workspace. The storage 40D is structured by an HDD (Hard Disk Drive), an SSD (Solid State Drive) or a flash memory, and stores various programs, including the operating system, and various data. The keyboard 40E and the mouse 40F are examples of input devices, and are used in order to carry out various types of input. The monitor 40G is a liquid crystal display for example, and displays a user interface. The monitor 40G may function as an input portion due to a touch-panel-type monitor being used therefor. The communication interface 40H is an interface for communicating with other equipment, and standards such as, for example, Ethernet^{®}, FDDI, Wi-Fi^{®} or the like are used thereat.

The functional structures of the learning device 40 are described next.

As illustrated in Fig. 1, the learning device 40 has, as the functional structures thereof, a creating section 42, a learning section 43, and a command generating section 44. These respective functional structures are realized due to the CPU 40A reading-out a learning program stored in the ROM 40B or the storage 40D, and expanding and executing the learning program in the RAM 40C. Note that some or all of the functions may be realized by dedicated hardware devices.

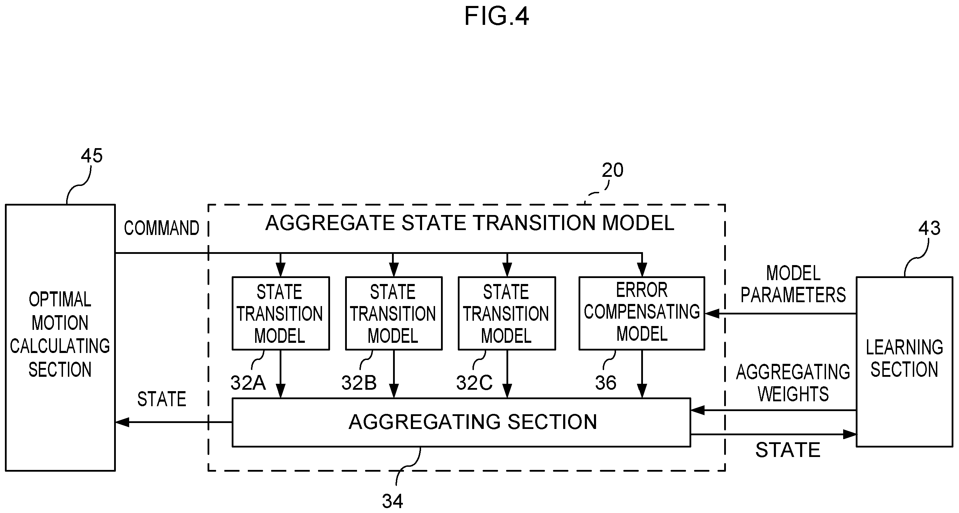

The creating section 42 creates the aggregate state transition model 20. As illustrated in Fig. 4, the aggregate state transition model 20 includes plural state transition models 32 that predict and output the next state of the robot 10 on the basis of the measured state of the robot 10 that is the object of control and a command given to the robot 10, and an aggregating section 34 that aggregates the results of prediction by the plural state transition models 32, and an error compensating model 36.

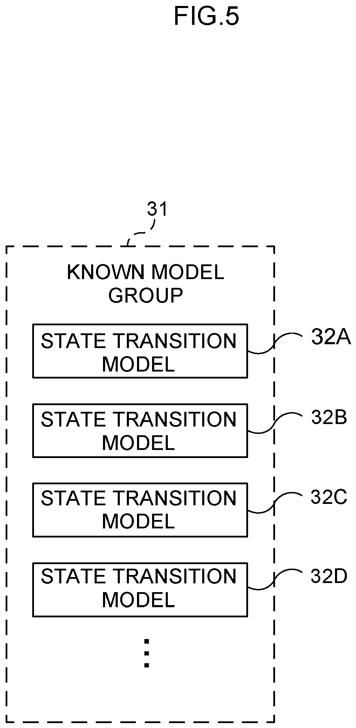

The plural state transition models 32 are state transition models that have already been learned, and are selected by the creating section 42 from among the plural, learned state transition models 32 that are included in a known model group 31 illustrated in Fig 5. The present embodiment describes a case in which the aggregate state transition model 20 includes three state transition models 32A ~ 32C selected by the creating section 42, but the number of state transition models is not limited to this, and it suffices for the aggregate state transition model 20 to include two or more state transition models. The creating section 42 combines the state transition models 32A ~ 32C selected from the known model group 31, and the aggregating section 34 and the error compensating model 36, and creates the aggregate state transition model 20. Note that the known model group 31 may be stored within the learning device 40 or may be stored on an external server.

The learning section 43 updates the aggregate state transition model 20 such that the error between the next state of the robot 10, which is predicted in accordance with the command outputted from the command generating section 44, and the measured state of the robot 10 corresponding to the next state, i.e., the state observed by the state observing sensors 30, becomes smaller.

The command generating section 44 has an optimal motion calculating section 45. The optimal motion calculating section 45 calculates the optimal motion that corresponds to the state of the robot 10, and outputs a command corresponding to the calculated motion to the robot 10. A model predictive control technique can be used in calculating the optimal motion. Model predictive control is a technique that utilizes a model of the object of control, and, each control period and on the basis of a prediction of the future state, determines an optimal command value at which the reward becomes a maximum, and effects control by using this command value. In the present embodiment, the aggregate state transition model 20 is used as the model of the object of control.

Specifically, each control period, the optimal motion calculating section 45 acquires data expressing a state x(t) of the robot 10 from the state observing sensors 30. Here, the acquired data is called the state observation data. The state observation data includes, for example, data that can specify the position and the posture of the gripper 12 or the part grasped by the gripper 12. The optimal motion calculating section 45 acquires the state observation data from the state observing sensors 30 that include, for example, encoders of the joints, visual sensors (cameras), motion capturing devices, force related sensors (force sensors, torque sensors, tactile sensors), displacement sensors, or the like.

Further, the optimal motion calculating section 45 judges whether or not an action by the robot 10 satisfies a predetermined success condition. As described later, in the present embodiment, for example, the one work operation (skill) that is the work operation of fitting-in a peg is learned by being divided into plural motion primitives (MPs). The optimal motion calculating section 45 judges whether or not a success condition that is set for each MP is satisfied. Examples of success conditions are, for example, the peg being positioned in a vicinity of the hole (without contact), the peg contacting the surface at the vicinity of the hole, the distal end of the peg catching on the hole, the peg catching on the hole and being parallel to the hole, the peg being completely fit in the hole, and the like. The optimal motion calculating section 45 may carry out judgement on the basis of the state observation data, or may carry out judgement on the basis of data that is different than the state observation data.

Further, each control period, the optimal motion calculating section 45 executes the respective processings of generating plural candidates for a command for the robot 10 that is the object of control, and acquiring plural next states x(t+1) of the robot 10 that are predicted from the state x(t) of the robot 10 and the plural candidates for the command for the robot 10 by using the aggregate state transition model, and deriving rewards corresponding to the plural next states x(t+1) of the robot 10 respectively, and generating and outputting a command that maximizes the reward on the basis of the results. The command can also be expressed as motion u(t). The reward is, for example, a reward that becomes greater, the smaller the distance between the state (the target state) of the gripper 12 (or peg 54) in the state in which the MP that is currently being executed is completed, and the current state of the gripper 12 (or the peg 54). The target locus of the position and posture of the gripper 12 (or the peg 54) in the MP that is currently being executed may be set, and a reward may be used that becomes greater, the smaller the error between the current position and posture of the gripper 12 (or the peg 54) and the target locus.

The optimal motion calculating section 45 may generate plural candidates for a series of commands that extends over plural time steps. In this case, the optimal motion calculating section 45 may derive a reward that corresponds also to the state of the robot 10 that is predicted from the candidates for the commands of the time steps from the second step and thereafter of each series of commands, and then derive the total sum of the rewards of the commands of the respective time steps of each candidate for the series of commands, and use the derived total sum as the reward corresponding to that candidate for the series of commands. Or, the optimal motion calculating section 45 may use the reward, which corresponds to the final command of the candidate of the series of commands, as the reward corresponding to that candidate of the series of commands. The optimal motion calculating section 45 may generate a series of commands such that the reward corresponding to the series of commands is maximized.

Namely, each control period, the optimal motion calculating section 45 executes the respective processings of generating plural candidates for a command or a series of commands for the robot 10 that is the object of control, and acquiring plural states or series of states of the object of control that are predicted from the state of the object of control and the plural candidates for a command or series of commands for the object of control by using the aggregate state transition model, and deriving rewards corresponding respectively to the plural states or series of states of the object of control, and, on the basis of the derived rewards, generating and outputting a command that maximizes the reward.

Each control period, the optimal motion calculating section 45 may generate one candidate for a command or a series of commands for the robot 10 that is the object of control, and derive a reward based on that candidate, and, by updating, one or more times, the candidate for the command or series of commands such that the reward is made larger, generate plural candidates for the command or the series of commands.

The optimal motion calculating section 45 may, each control period, generate plural candidates for a command or a series of commands for the robot 10 that is the object of control, and thereafter, acquire the state or the series of states of the robot 10 that is predicted from the plural candidates respectively.

Note that, as illustrated in Fig. 1, in the present embodiment, the structure that includes the optimal motion calculating section 45 and the aggregate state transition model 20 is called a policy 46. The policy 46 means the existence (functions, photographs, modules or the like) of receiving an observed state and returning the motion that is to be performed, and is also called the scheme or the controller.

The state transition model 32 is a model whose inputs are the state x(t) and the motion u(t) of that time, and that outputs next state x(t+1) that is after the motion. The optimal motion calculating section 45 uses the state x(t) as the input, and generates the motion u(t) that is to be performed. The optimal motion calculating section 45 generates the motion (command) u(t) that is to be performed, such that the anticipated cumulative reward is maximized. The optimal motion calculating section 45 may learn a model for generating the motion u(t) that is to be performed. The optimal motion calculating section 45 generates a command for the robot 10 on the basis of the generated motion u(t), and transmits the command.

Here, the state observation data that can be used in the present embodiment is described. Examples of the state observation data include data of the tactile distribution (e.g., the pressure distribution) at the region of the gripper 12 that contacts the object, the force that is measured by a force sensor provided at the nipping portion 12a of the gripper 12, the angle and angular velocity of each joint that are acquired from the encoders of the joints of the robot 10, the torque applied to the joints of the robot 10, images acquired by visual sensors mounted to the arm of the robot 10, the force received by the flexible portion 13 of the robot 10 that is measured by a force sensor, the relative displacement between the regions on either side of the flexible portion 13 that is measured by a displacement sensor provided at the flexible portion 13, and the position and posture of the gripper 12 measured by motion capturing devices.

The position, posture (angle), speed, and angular velocity of a change in posture of the distal end 11a of the arm 11 are determined from the data from the joint encoders. Note that, provided that the position and the posture (angle) of respective points in time can be acquired, the changes over time thereof (speed, angular velocity) can be acquired, and therefore, mention of the fact that changes over time can be acquired may be omitted hereinafter. The positions and postures of the gripper 12 and the object of grasping with respect to the arm 11 are determined by the data from the visual sensors. The position and posture of the gripper 12 with respect to the arm 11, or the position and posture of the object of grasping with respect to the gripper 12, are determined also by data from the force related sensors.

Further, in a case in which a marker for motion capturing is mounted to the gripper 12, the position and posture of the gripper 12 can be acquired by motion capturing only. The position and the posture of the object of grasping with respect to the arm may be determined by using visual sensors or force related sensors. Further, if a marker is mounted to the object of grasping as well, the position and posture of the object of grasping as well can be obtained.

### (Motion Primitives)

Motion primitives are described next. The work operation of fitting-in a peg that is learned in the present embodiment is divided into plural operational segments, and learning of a control model is carried out for each of these respective segments. Each of the operational segments is a motion primitive. A motion primitive can also be called an MP or a primitive operation.

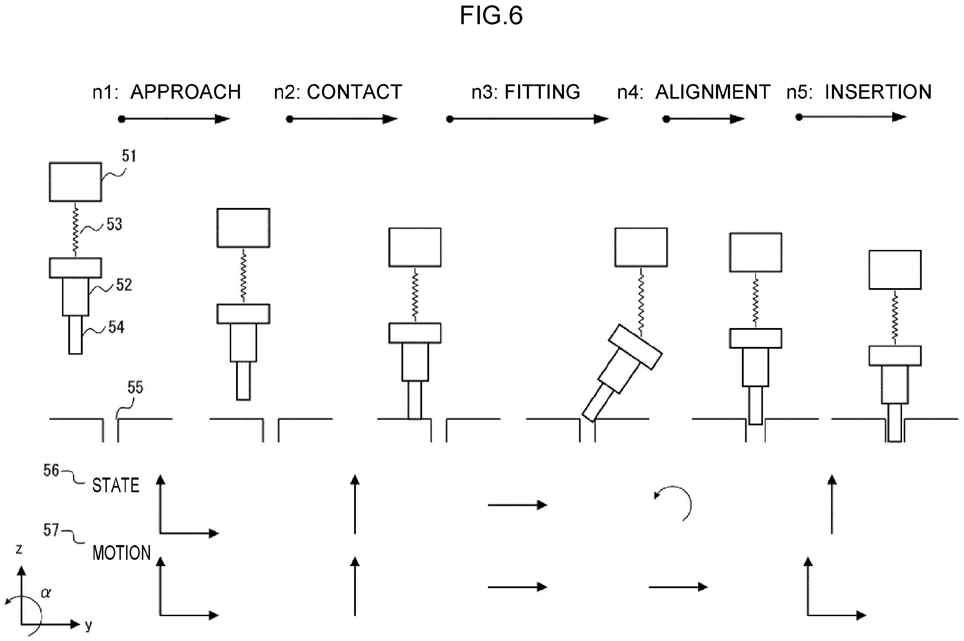

The MPs that structure the work operation of fitting-in a peg in the present embodiment are described with reference to Fig. 6. In Fig. 6, 51 is an arm distal end, 52 is a gripper, 53 is a flexible portion, 54 is an object of grasping (peg), and 55 is a hole. Reference numerals 56 and 57 in Fig. 6 respectively indicate the state and the motion that are considered in each MP.

The object of the peg fitting-in work operation overall is to insert the peg 54 in the hole 55. The work operation of fitting-in the peg is divided into the following five MPs. When the error with respect to a target value that is specified in an MP becomes a threshold value or less, the process transitions to the next MP.
n1: approach
n2: contact
n3: fitting
n4: alignment
n5: insertion

The "n1: approach" is the action of making the gripper 52 approach a vicinity of the hole 55 from an arbitrary initial position. The "n2: contact" is the action of causing the peg 54 to contact the surface in a vicinity of the hole 55. In a case in which the flexible portion 53 can be switched between a fixed mode and a flexible mode, the flexible portion 53 is switched to the flexible mode before contact. The "n3: fitting" is the action of moving the peg 54 while maintaining the state in which the peg 54 contacts the surface, and causing the distal end of the peg 54 to fit into the distal end of the hole 55. The "n4: alignment" is the action of, while maintaining the state in which the distal end of the peg 54 is fit into and is contacting the hole 55, making the posture of the peg 54 become parallel to the hole 55 (vertical in this example). The "n5: insertion" is the action of inserting the peg 54 in to as far as the bottom of the hole 55.

In "n1: approach" and "n2: contact", i.e., in the MPs in which the peg 54 is not contacting the surface, it suffices to move the peg 54 to the target position by position control. In "n3: fitting", "n4: alignment" and "n5: insertion", i.e., in the MPs that maintain the state of the peg 54 contacting the environment (the primitive operations with contact), the positions of the gripper 52 and the peg 54 are controlled by speed control based on machine learning. In machine learning in an MP with contact, the aggregate state transition model 20 is learned by learning processing in which the numbers of dimensions of the state space and the motion space are reduced.

Here, description is given of movement of the gripper 52 and the peg 54 being carried out within the yz plane. In the "n1: approach" MP, the yz position of the peg 54 is the input, and position control within the yz plane is carried out. In the "n2: contact" MP, the z position of the peg 54 is the input, and position control in the z direction is carried out.

In the "n3: fitting" MP, expression of a model that does not explicitly consider the z direction due to environmental constraints and the flexible portion 53 of the arm is possible. The state can be the position/speed in the y direction, and the motion can be the speed command in the y direction. The position of the gripper 52 at the time when the distal end of the peg 54 is fit in the hole 55 is used as the target value.

In the "n4: alignment" MP, the state is the angle and the angular velocity of the gripper 52, and the motion is the speed command in the y direction. Because displacement with six degrees of freedom (three degrees of freedom in the two-dimensional yz plane) is possible at a flexible wrist, in the state in which the distal end of the peg 54 and the hole contact one another, rotational motion of the peg 54 is possible only by translational motion in the y direction. The angle of the gripper 52 at the time when the posture of the peg 54 is vertical is used as the target value.

In the "n5: insertion" MP, the state is the position and speed in the z direction, and the motion is the speed command positions in the y direction and the z direction. The speed command in the y direction is introduced in order to avoid jamming of the peg 54 (the peg 54 becoming unable to move during insertion). The position of the gripper at the time when the peg 54 reaches the bottom of the hole 55 is used as the target position.

### (Aggregate State Transition Model)

As illustrated in Fig. 4, as an example in the present embodiment, the aggregate state transition model 20 includes the three state transition models 32A ~ 32C, the aggregating section 34, and the error compensating model 36.

The aggregate state transition model 20 is a structure that, at the aggregating section 34, consolidates the outputs of the state transition models 32A ~ 32C, in accordance with the aggregating weight of each output. In the present embodiment, the aggregate state transition model 20 is a structure that, at the aggregating section 34, consolidates the output of the error compensating model 36 in addition to the outputs of the state transition models 32A ~ 32C, in accordance with the aggregating weight of each output. Note that the method of consolidating may be linear combination, or may be non-linear consolidation using multilayer perceptron (MLP) or the like. Further, in the case of linear combination, there may be a structure in which the user can set some of the weights. Further, the error compensating model 36 is a model that can be learned (can be updated), and is learned simultaneously with the consolidating parameters (residual learning). Further, in a case in which the state transition models 32A ~ 32C can be learned (can be differentiated), they may be additionally learned simultaneously with the consolidating parameters.

The command outputted from the optimal motion calculating section 45 is inputted to the state transition models 32A ~ 32C and the error compensating model 36. The state transition models 32A ~ 32C and the error compensating model 36 output, to the aggregating section 34, states corresponding to the inputted command. The aggregating section 34 aggregates the inputted states and outputs them to the optimal motion calculating section 45 and the learning section 43.

The learning section 43 learns the aggregate state transition model 20 by updating the aggregating weights, i.e., the weights for the outputs from the state transition models 32A ~ 32C and the error compensating model 36, respectively. Specifically, the learning section 43 derives, as the predicted error, the error between the state measured by the state observing sensors 30 and the predicted state outputted from the aggregating section 34, and derives the aggregating weights that make the predicted error smaller, and sets the new, derived aggregating weights at the aggregating section 34, and thereby updates the aggregating section 34.

Further, the aggregate state transition model 20 includes the error compensating model 36 in parallel with the state transition models 32A ~ 32C. The learning section 43 derives model parameters of the error compensating model 36 that make the predicted error smaller, and sets the new, derived model parameters at the error compensating model 36, and thereby updates the error compensating model 36. Note that, although the present embodiment describes a case in which the aggregate state transition model 20 includes the error compensating model 36, the aggregate state transition model 20 may be structured so as to not include the error compensating model 36.

The state transition model 32A is the state transition model that was already learned in environment A. The state transition model 32B is the state transition model 32 that was already learned in environment B that is different than environment A. The state transition model 32C is the state transition model 32 that was already learned in environment C that is different from environment A and environment B.

Here, a different environment means that the work operation conditions in a case in which the robot 10 executes a target work operation are different. The type of part that the robot 10 manipulates being different is an example of a different environment. Specifically, this is a case in which, for example, at least one of the shape, thickness and length of the peg 54 that the robot 10 manipulates is different. Further, the type of the object, to which the part that the robot 10 manipulates is to be assembled, being different is an example of a different environment. Specifically, this is a case in which at least one of the position, direction and shape of the hole 55 into which the peg 54 is to be inserted is different.

In this way, the aggregate state transition model 20 includes the state transition models 32A ~ 32C that have already been learned in respectively different environments.

### (Learning Processing)

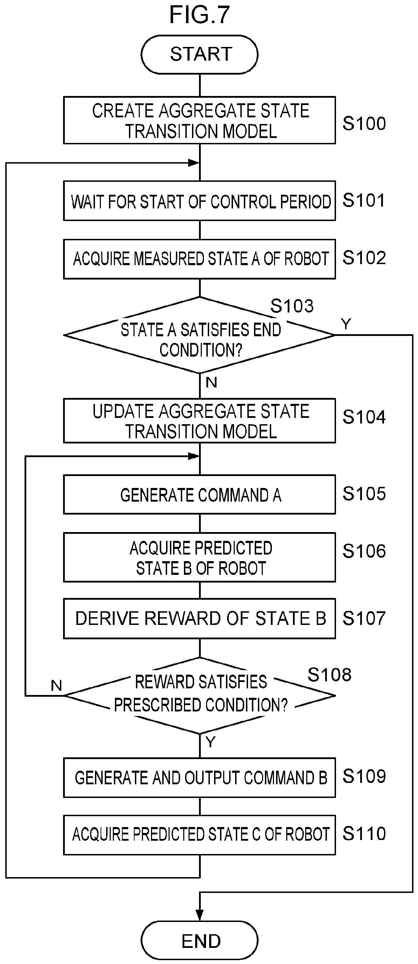

Fig. 7 is a flowchart illustrating the flow of the learning processing by which the learning device 40 learns the aggregate state transition model 20 by using machine learning. The flowchart illustrated in Fig. 7 is learning processing for one MP, and this learning processing is applied to each of the MPs.

In step S 100, the learning device 40 creates the aggregate state transition model 20 that is to be used. Namely, the creating section 42 selects the state transition models 32A ~ 32C from the known model group 31, and combines the aggregating section 34 and the error compensating model 36 therewith so as to create the aggregate state transition model 20.

The processings of step S 102 ~ step S 110 that are described hereinafter are executed each given time interval in accordance with the control period. The control period is set to a time in which the processings of step S102 ~ step S110 can be executed.

In step S101, the learning device 40 stands-by from the start of the control period of the previous time, until the predetermined time corresponding to the length of the control period elapses. Note that the processing of step S 101 may be omitted, and the processing of the next control period may be started immediately after the processing of the previous control period is completed.

In step S102, the learning device 40 acquires the state of the robot 10. Namely, the learning device 40 acquires the state observation data of the robot 10 from the state observing sensors 30. Specifically, the command generating section 44 acquires, as the state observation data, data of the position, the speed, the angle and the angular velocity of the gripper 52 that were observed by the state observing sensors 30. The state that is acquired in step S102 is called state A hereinafter.

In step S103, the learning section 40 judges whether or not state A that was acquired in step S102 satisfies a predetermined end condition. Here, a case in which an end condition is satisfied is a case in which, for example, the difference between state A and a target state is less than or equal to a prescribed value.

If the judgement in step S103 is affirmative, the present routine is ended. On the other hand, if the judgement in step S103 is negative, the learning device 40 moves on to step S104.

In step S104, the learning device 40 updates the aggregate state transition model 20 such that the error between predicted state C of the robot 10, which was acquired by using the aggregate state transition model 20 in step S 110 of the previous control period, and actually-measured state A of the robot 10 that was acquired in step S102, will become smaller from now on. Namely, the learning section 43 updates the aggregating weights such that the error between state C, which is the predicted next state of the robot 10 that was outputted in step S 110 of the previous control period and corresponds to command B, and state A of the robot 10 that was measured and corresponds to state C, will become smaller. Note that the processing of step S 104 is skipped in the initial control period.

In step S105, one candidate of a command or a series of commands for the robot 10 is generated. Specifically, the optimal motion calculating section 45 inputs state A of the robot 10 that was measured in step S 102, and generates one candidate for a command or a series of commands for the robot 10. Hereinafter, the one candidate for a command or a series of commands for the robot 10 is called command A. Newton's method for example can be used in generating command A, but the method is not limited to this. Note that command A is generated randomly in the initial control period. Further, in the control periods from the second control period on, the command A of the previous time is updated by the generated command A.

In step S106, the learning device 40 predicts the state or the series of states of the robot 10. Namely, the optimal motion calculating section 45 outputs state A of the robot 10 and command A for the robot 10 to the aggregate state transition model 20. Due thereto, the aggregate state transition model 20 predicts the next state of the robot 10 corresponding to command A, and outputs the predicted state or series of states to the optimal motion calculating section 45. Due thereto, the optimal motion calculating section 45 acquires the predicted state or series of states. The predicted state or series of states is called state B hereinafter. Note that, at the optimal motion calculating section 45, in a case in which command A is a single command, state B that is a single state is acquired, and, in a case in which command A is a series of commands, state B that is a series of states is acquired.

In step S107, the learning device 40 derives the reward corresponding to state B.

In step S108, the learning device 40 judges whether or not the reward derived in step S107 satisfies a prescribed condition. Here, a case in which the reward satisfies the prescribed condition is, for example, in a case in which the reward exceeds a prescribed value, or a case in which the loop of the processings of step S 105 ~ S108 has been executed a prescribed number of times, or the like. The prescribed number of times is set to be, for example, 10 times, 100 times, 1000 times, or the like.

Further, in a case in which the judgement of step S 108 is affirmative, the learning device 40 moves on to step S109. In a case in which the judgement of step S 108 is negative, the learning device 40 moves on to step S105.

In step S109, the learning device 40 generates command B on the basis of the reward corresponding to the state or series of states of the robot 10 derived in step S107, and outputs command B. Note that command B may be command A itself of the time when the reward satisfied a prescribed condition, or may be a command that is predicted from the history of changes in the reward corresponding to changes in command A and that, moreover, can maximize the reward. Further, in a case in which command A is a series of commands, command B is determined on the basis of the initial command in the series of commands.

In step S110, the learning device 40 predicts the state or the series of states of the robot 10. Namely, the optimal motion calculating section 45 outputs state A of the robot 10 and command B for the robot 10 to the aggregate state transition model 20. Due thereto, the aggregate state transition model 20 predicts state C that is the next state of the robot 10 corresponding to command B, and outputs the predicted state or series of states to the optimal motion calculating section 45. The optimal motion calculating section 45 thereby acquires the predicted state or series of states.

In this way, the processings of steps S101 ~ S110 are repeated each control period.

### (Another Example of Learning Processing)

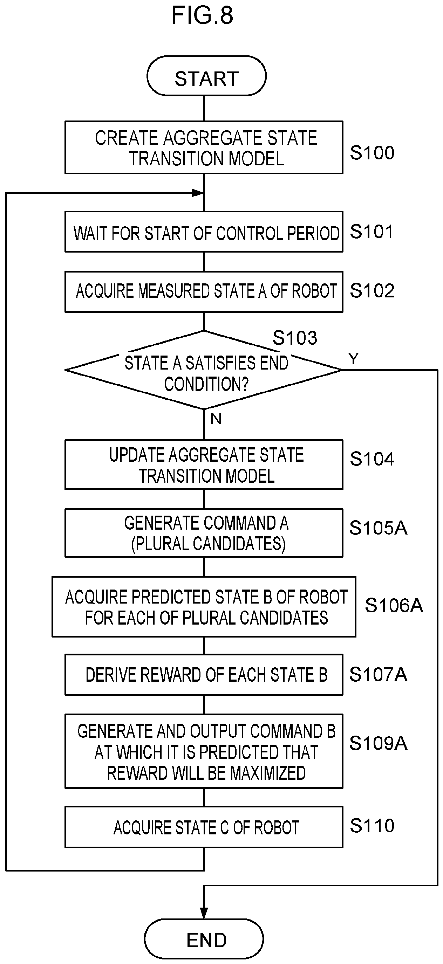

Another example of the learning processing is described next with reference to the flowchart illustrated in Fig. 8. Note that processings that are the same as those of Fig. 7 are denoted by the same step numbers, and detailed description thereof is omitted.

As illustrated in Fig. 8, the processings of steps S105A ~ S109A differ from the processings illustrated in Fig. 7.

In step S105A, plural candidates for the command or the series of commands for the robot 10 are generated. Specifically, the optimal motion calculating section 45 inputs state A of the robot 10 that was measured in step S102, and generates plural candidates (commands A) of the command or series of commands for the robot 10. The cross-entropy method (CEM) for example can be used in generating the commands A, but the method of generating is not limited to this.

In step S106A, the learning device 40 predicts the state or series of states of the robot 10. Namely, the optimal motion calculating section 45 outputs state A of the robot 10 and commands A for the robot 10 to the aggregate state transition model 20. Due thereto, the aggregate state transition model 20 predicts the next state of the robot 10 corresponding to each candidate of the plural candidates for the command or the series of commands for the robot 10, and outputs the predicted states or series of states to the optimal motion calculating section 45. The optimal motion calculating section 45 thereby acquires the predicted state or series of states (state B) for each candidate.

In step S107A, the learning device 40 derives a reward corresponding to each state B.

In step S109A, on the basis of the rewards corresponding to the respective states B of the robot 10 that were derived in step S107A, the learning device 40 generates command B that maximizes the reward, and outputs the command B. For example, the learning device 40 derives a relational expression that expresses the relationship of correspondence between commands A, which correspond to the respective states B, and the rewards, and uses the command, which corresponds to the maximum reward on the curve expressed by the derived relational expression, as the command B. A command that maximizes the reward is obtained thereby.

### (Control Device)

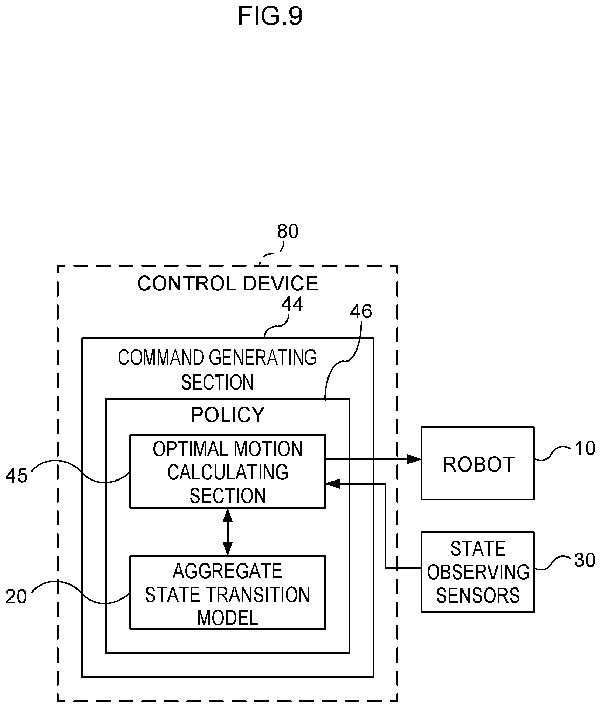

Fig. 9 illustrates the structure of an applied phase of the robot system 1. In the applied phase, the robot system 1 has the robot 10 and a control device 80.

Because the hardware structures of the control device 80 are similar to those of the learning device 40, repeat description will be omitted. The control device 80 has the command generating section 44 as the functional structure thereof. The respective functional structures are realized by the CPU 40A reading-out a control program stored in the ROM 40B or the storage 40D, and expanding and executing the control program in the RAM 33. Note that some or all of the functions may be realized by dedicated hardware devices.

The command generating section 44 includes the optimal motion calculating section 45 and the aggregate state transition model 20. The aggregate state transition model 20 is stored in the RAM 40C that serves as an example of the storage. Note that the aggregate state transition model 20 may be stored in the storage 40D, and not in a storage that temporarily stores such as the RAM 40C. Further, in a case in which the aggregate state transition model 20 is stored on an external server, the model may be downloaded from the external server and stored temporarily in the RAM 40C, or stored in the storage 40D. Further, the aggregate state transition model 20, which is in a state of being expanded in the RAM 40C at the time of learning by the learning device 40, may be used.

By using the aggregate state transition model 20 learned by the learning device 40, the optimal motion calculating section 45 generates a command corresponding to the action that the robot 10 will be made to carry out. The optimal motion calculating section 45 in Fig. 9 differs from the optimal motion calculating section 45 in Fig. 1 only with regard to the point that the aggregate state transition model 20 that has been learned is used, and therefore, detailed description is omitted here.

In the MPs with contact from the "fitting" on, in a case in which it is judged that a success condition of the current MP is satisfied, the command generating section 44 switches to the aggregate state transition model 20 corresponding to the next MP, and to a model that generates the motion (command) u(t) that is to be performed. Specifically, in a case in which the "fitting" is successful, the command generating section 44 switches to the aggregate state transition model 20 corresponding to "alignment". In a case in which the "alignment" is successful, the command generating section 44 switches to the aggregate state transition model 20 corresponding to "insertion", and to a model that generates the motion (command) u(t) that is to be performed. In a case in which the "insertion" is successful, it is judged that the work operation of fitting-in the peg 54 is completed.

Note that the task is discontinued and the process is returned to the initial state, in a case in which an end condition has not been satisfied within the time step set in advance for that MP, or in a case in which excessive force is applied to the robot 10, or in a case in which the robot arrives at a region outside of the designated region.

The control device 80 may be a control device other than the learning device 40, or may be a control device that structures a portion of the learning device 40. For example, the learning device 40 that is used in learning may be used as is as the control device 80, and control using the aggregate state transition model 20 that has been learned may be carried out. Further, the control device 80 may carry out control while continuing learning.

In this way, in the present embodiment, the aggregate state transition model 20 in a new environment is learned by using the state transition models 32A ~ 32C that have already been learned. Therefore, at the time when the robot 10 autonomously acquires control rules for achieving a work operation, learning can be carried out in a short time.

### <Modified Examples>

The above-described embodiments are merely intended for exemplary explanation of structural examples of the present disclosure. The present disclosure is not limited to the above-described specific forms, and can be modified in various ways within the scope of the technical concepts thereof.

The above examples describe the work operation of fitting-in the peg 54 as an example, but the work operation that is the object of learning and control may be any arbitrary work operation. However, the present disclosure is suited to work operations that include actions in which the gripper 52 itself or the part grasped by the gripper 52 contacts the environment. Further, in the above examples, learning of the aggregate state transition model 20 is carried out only in the operational segments (MPs) in which the object of grasping is contacting the environment. However, learning of the aggregate state transition model 20 may be carried out also in the operational segments (MPs) in which the object of grasping or the gripper 52 is not contacting the environment. Further, learning of the aggregate state transition model 20 may be carried out without dividing the work operation into plural operational segments. Namely, the processing illustrated in the flowchart of Fig. 7 or Fig. 8 may be executed without dividing the work operation into actions from the approach to the completion of the insertion. Note that, for example, the reward in this case is a reward that becomes greater, the smaller the distance between the state (the target state) of the gripper 12 (or the peg 54) in the insertion completed state, and the current state of the gripper 12 (or the peg 54). The rectilinear distance in a three-dimensional space, or the distance within a six-dimensional space of the position/posture, or the like can be used as this distance.

Note that any of various types of processors other than a CPU may execute the learning processing and control processing that are executed due to the CPU reading-in software (programs) in the above-described respective embodiments. Examples of processors in this case include PLDs (Programmable Logic Devices) whose circuit structure can be changed after production such as FPGAs (Field-Programmable Gate Arrays) and the like, and dedicated electrical circuits that are processors having circuit structures that are designed for the sole purpose of executing specific processings such as ASICs (Application Specific Integrated Circuits) and the like, and the like. Further, the learning processing and the control processing may be executed by one of these various types of processors, or may be executed by a combination of two or more of the same type or different types of processors (e.g., plural FPGAs, or a combination of a CPU and an FPGA, or the like). Further, the hardware structures of these various types of processors are, more specifically, electrical circuits that combine circuit elements such as semiconductor elements and the like.

Further, the above respective embodiments describe forms in which the learning program and the control program are stored in advance (installed) in the storage 40D or the ROM 40B, but the present disclosure is not limited to this. The programs may be provided in the form of being recorded on a recording medium such as a CD-ROM (Compact Disk Read Only Memory), a DVD-ROM (Digital Versatile Disk Read Only Memory), a USB (Universal Serial Bus) memory, or the like. Further, the programs may be in forms of being downloaded from an external device over a network.

Note that the disclosure of Japanese Patent Application No. 2020-146401 is, in its entirety, incorporated by reference into the present specification. Further, all publications, patent applications, and technical standards mentioned in the present specification are incorporated by reference into the present specification to the same extent as if such individual publication, patent application, or technical standard was specifically and individually indicated to be incorporated by reference.

### Explanation of Reference Numerals

- 1: robot system
- 10: robot
- 11: arm
- 11a: arm distal end
- 12: gripper
- 12a: nipping portion
- 13: flexible portion
- 13a: spring
- 20: aggregate state transition model
- 22: storage device
- 26: policy updating section
- 30: state observing sensors
- 32A, 32B, 32C: state transition model
- 34: aggregating section
- 36: error compensating model
- 40: learning device
- 41: inputting section
- 42: creating section
- 43: learning section
- 44: command generating section
- 45: optimal motion calculating section
- 52: gripper
- 53: flexible portion
- 54: peg
- 55: hole
- 80: control device

## Claims

1. A learning device, comprising:
a creation unit configured to create an aggregate state transition model including a plurality of state transition models that predict a next state of an object of control based on a measured state of the object of control and a command for the object of control, and including an aggregation unit configured to aggregate results of prediction by the plurality of state transition models;
a command generation unit configured to execute, for each control period, respective processing of inputting the measured state of the object of control, generating a plurality of candidates for a command or a series of commands for the object of control, acquiring a plurality of states or series of states of the object of control that are predicted from the state of the object of control and the plurality of candidates for a command or a series of commands for the object of control using the aggregate state transition model, deriving a reward corresponding to each of the plurality of states or series of states of the object of control, and, based on the derived rewards, generating and outputting a command that maximizes the reward; and
a learning unit that updates the aggregate state transition model such that an error between a predicted next state of the object of control corresponding to the output command, and a measured state of the object of control corresponding to the next state, is reduced.

2. The learning device of Claim 1, wherein, each control period, the command generation unit generates one candidate for a command or series of commands for the object of the control, derives a reward that is based on the generated candidate, and updates, one or more times, the candidate for the command or series of commands such that the reward becomes larger, thereby generating a candidate for the command or series of commands.

3. The learning device of Claim 1, wherein, each control period, the command generation unit generates a plurality of candidates for a command or a series of commands for the object of control, and thereafter, acquires a state or a series of states of the object of control that is predicted from each of the plurality of candidates.

4. The learning device of any one of Claims 1 through 3, wherein the aggregate state transition model is a structure that consolidates outputs of the plurality of state transition models at the aggregation unit, in accordance with aggregating weights of the respective outputs.

5. The learning device of Claim 4, wherein the learning unit updates the aggregating weights.

6. The learning device of any one of Claims 1 through 5, wherein:
the aggregate state transition model includes an error compensation model in parallel with the plurality of state transition models, and
the learning unit updates the error compensation model.

7. A learning method, comprising, by a computer:
creating an aggregate state transition model including a plurality of state transition models that predict a next state of an object of control based on a measured state of the object of control and a command for the object of control, and including an aggregation unit that aggregates results of prediction by the plurality of state transition models;
executing, for each control period, respective processing of inputting the measured state of the object of control, generating a plurality of candidates for a command or a series of commands for the object of control, acquiring a plurality of states or series of states of the object of control that are predicted from the state of the object of control and the plurality of candidates for a command or a series of commands for the object of control using the aggregate state transition model, deriving a reward corresponding to each of the plurality of states or series of states of the object of control, and, based on the derived rewards, generating and outputting a command that maximizes the reward; and
updating the aggregate state transition model such that an error between a predicted next state of the object of control corresponding to the output command, and a measured state of the object of control corresponding to the next state, is reduced.

8. A learning program, executable by a computer to perform processing, the processing comprising:
creating an aggregate state transition model including a plurality of state transition models that predict a next state of an object of control based on a measured state of the object of control and a command for the object of control, and including an aggregation unit that aggregates results of prediction by the plurality of state transition models;
executing, for each control period, respective processing of inputting the measured state of the object of control, generating a plurality of candidates for a command or a series of commands for the object of control, acquiring a plurality of states or series of states of the object of control that are predicted from the state of the object of control and the plurality of candidates for a command or a series of commands for the object of control using the aggregate state transition model, deriving a reward corresponding to each of the plurality of states or series of states of the object of control, and, based on the derived rewards, generating and outputting a command that maximizes the reward; and
updating the aggregate state transition model such that an error between a predicted next state of the object of control corresponding to the output command, and a measured state of the object of control corresponding to the next state, is reduced.

9. A control device, comprising:
a storage unit configured to store an aggregate state transition model learned by the learning device of any one of Claims 1 through 6; and
a command generation unit configured to execute, for each control period, respective processing of inputting the measured state of the object of control, generating a plurality of candidates for a command or a series of commands for the object of control, acquiring a plurality of states or series of states of the object of control that are predicted from the state of the object of control and the plurality of candidates for a command or a series of commands for the object of control using the aggregate state transition model, deriving a reward corresponding to each of the plurality of states or series of states of the object of control, and, based on the derived rewards, generating and outputting a command that maximizes the reward.

10. A control method, comprising, by a computer:
acquiring an aggregate state transition model from a storage unit that stores the aggregate state transition model learned by the learning device of any one of Claims 1 through 6; and
executing, for each control period, respective processing of inputting the measured state of the object of control, generating a plurality of candidates for a command or a series of commands for the object of control, acquiring a plurality of states or series of states of the object of control that are predicted from the state of the object of control and the plurality of candidates for a command or a series of commands for the object of control using the aggregate state transition model, deriving a reward corresponding to each of the plurality of states or series of states of the object of control, and, based on the derived rewards, generating and outputting a command that maximizes the reward.

11. A control program, executable by a computer to perform processing, the processing comprising:
acquiring an aggregate state transition model from a storage unit that stores the aggregate state transition model learned by the learning device of any one of Claims 1 through 6; and
executing, for each control period, respective processing of inputting the measured state of the object of control, generating a plurality of candidates for a command or a series of commands for the object of control, acquiring a plurality of states or series of states of the object of control that are predicted from the state of the object of control and the plurality of candidates for a command or a series of commands for the object of control using the aggregate state transition model, deriving a reward corresponding to each of the plurality of states or series of states of the object of control, and, based on the derived rewards, generating and outputting a command that maximizes the reward.
